Europäisches Patentamt

European Patent Office

Office européen des brevets

(11) Publication number: **0 168 067**
**A1**

## EUROPEAN PATENT APPLICATION

(21) Application number: **85200615.4**

(22) Date of filing: **19.04.85**

(51) Int. Cl.⁴: **B 60 R 25/00**
**B 60 T 3/00**

(30) Priority: **11.05.84 NL 8401543**

(43) Date of publication of application:
**15.01.86 Bulletin 86/3**

(84) Designated Contracting States:
**AT BE CH DE FR GB IT LI LU NL SE**

(71) Applicant: **Strokap, Herman**
**31 Obrechtlaan**
**NL-6711 EK Ede(NL)**

(72) Inventor: **Strokap, Herman**
**31 Obrechtlaan**
**NL-6711 EK Ede(NL)**

(74) Representative: **Reynvaan, Lambertus Johannes,**
**Ir. et al,**
**EXTERPATENT Willem Witsenplein 4**
**NL-2596 BK 's-Gravenhage(NL)**

(54) Device for locking a wheel of a vehicle.

(57) The device comprises two frame parts (1 and 2) to be placed in front of and behind the wheel to be locked, which frame parts can be fastened to one another. Each frame part consists of a support part (3, 4; 5, 6) resting on the ground and an upstanding position (11, 12, 17, 18, 19, 20; 11', 12', 17', 18', 19', 20') which is connected to the support part so that the upstanding portion can be folded up or folded down against the support part. In the folded up and mounted position the upstanding portion encloses the wheel both in the direction of travel and partly along the side faces.

FIG. 5.

0168067

- 1 -

DEVICE FOR LOCKING A WHEEL OF A VEHICLE

BACKGROUND OF THE INVENTION

The present invention relates to a device for locking a wheel of a vehicle for the purpose of protection against theft, comprising a frame part to be placed in front of and behind the wheel, referring to the direction of travel of the wheel, which frame part consists of two parallel beams spaced apart from one another, the beams of one frame part being adapted to slide telescopically in the beams of the other frame part and to be fastened to one another so as to enclose the wheel in question, and each frame part being provided with means for locking the wheel in the direction of travel.

A device of this kind is for example known from British Patent Application No. 2 112 725. This known device comprises a pair of wheel chocks of identical construction. Each wheel chock has a triangular shape and is intended to be placed in contact with the tyre of the wheel, one at the leading edge of the tyre and one at the trailing edge of the tyre. Both wheel chocks can be fastened to one another by means of tubular members, which slide telescopically in one another. Said known device has the disadvantage of being relative cumbersome so that the device takes up a lot of room and is not easy to handle or to transport.

## SUMMARY OF THE INVENTION

It is therefore a primary object of the present invention to provide a wheel locking device for a vehicle which can be attached and removed again in a simple manner and which in addition is easily transported and takes up little room. According to the invention this aim is achieved in that the two parallel beams of each frame part form a support part to be placed on the ground, and the wheel locking means are formed by an upstanding portion which is connected to the support part for folding down and up and which encloses the wheel both in the direction of travel and partly along the side faces. The foldability gives the device so small a volume when it is not in use, that it can easily be kept in the boot of a vehicle without taking up much room.

In a preferred embodiment of the invention between the parallel beams of each support part, a tiltable plate is disposed which is provided with anchoring means gripping in the ground when the plate is tilted through the action of the wheel riding onto it.

If it is attempted to drive the locked vehicle away, the wheel enclosed by the device will ride onto the plate. The plate will thus tilt and engage its anchoring means in the ground, while the upstanding part will prevent further movement of the wheel. This arrangement has the advantage that the device cannot be carried along over the ground by the vehicle.

SURVEY OF THE DRAWINGS

FIG. 1 is a view in perspective of the two separate frame parts;

FIG. 2 is a longitudinal section of one of the frame parts;

FIG. 3 is a view, similar to fig. 2, of the frame part shown in fig. 2, but in an intermediate position during the folding movement;

FIG. 4 is on a larger scale a detail of the longitudinal section shown in fig. 2; and

FIG. 5 is a perspective view of another embodiment of the device having a wheel enclosed in between both interconnected frame parts.

DESCRIPTION OF THE PREFERRED EMBODIMENTS

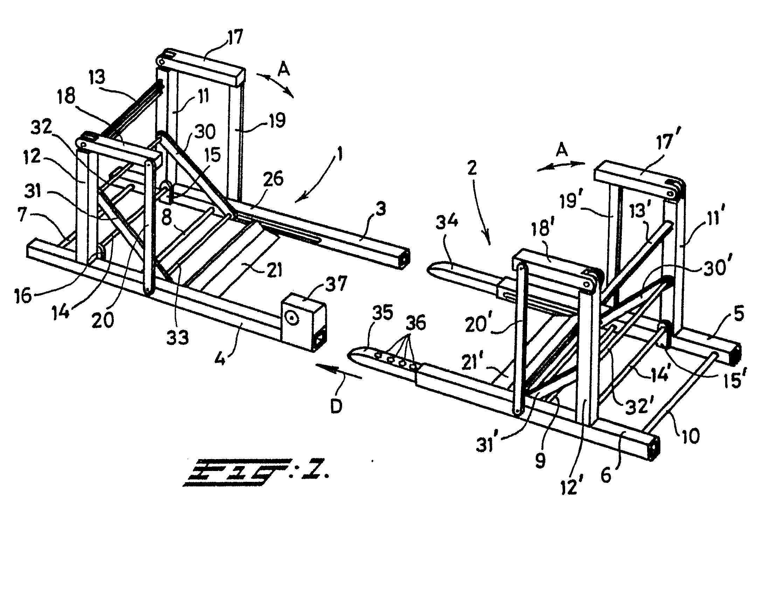

As can be clearly seen in fig. 1, the device according to the invention consists of two separate frame parts indicated generally by the respective reference numerals 1 and 2. Each  frame part consists of a support part which is placed on the ground, and which is composed of two parallel hollow beams 3, 4 and 5, 6 respectively, which have rectangular cross-sections  and are spaced apart and which are joined together by means of crossbars 7, 8 and 9, 10 respectively.

Each of the frame parts is provided with an upstanding portion, these portions being identical for the two frame parts 1 and 2.

On the upper face of the beam 3 is disposed a bar 11, while on the upper face of the beam 4 a bar 12 is disposed, these bars 11 and 12 being joined together by means of a crossbar 13. The two bars 11, 12 have a rectangular cross-section and are hingedly connected to the respective beams 3, 4 in such a manner that the bars can be pivoted conjointly from a position perpendicular to the beams, about an axis extending at right angles to the beams, in the direction of the arrows A until the bars 11 and 12 assume a position in which they are folded down onto the upper face of the respective beams 3 and 4. This hinge connection is formed with the aid of a hinge pin 14 mounted in lugs 15, 16 welded to the mutually facing sides of the respective beams 3 and 4.

At the end of the hinge bars 11 and 12 remote from the hinge pin 14 a bar 17 and 18 respectively is hingedly fastened, the other ends of these bars being hingedly connected to bars 19, 20, which in turn are hingedly fastened to the respective beams 3 and 4. The construction is such that the bars 17 and 18 extend parallel to the beams 3 and 4, while the bars 19 and 20 extend parallel to the bars 11 and 12, so that two parallel parallelograms are formed, which can be conjointly folded down.

The upstanding portion of the frame part 2 is of identical construction, and the various components are given the same reference numerals in fig. 1 with the addition of a prime.

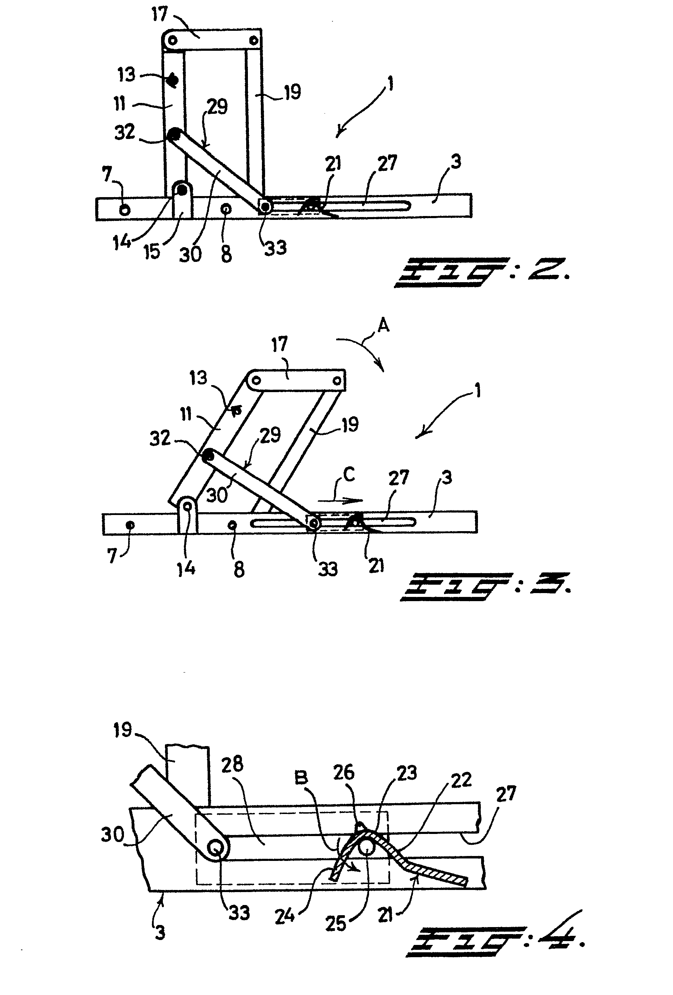

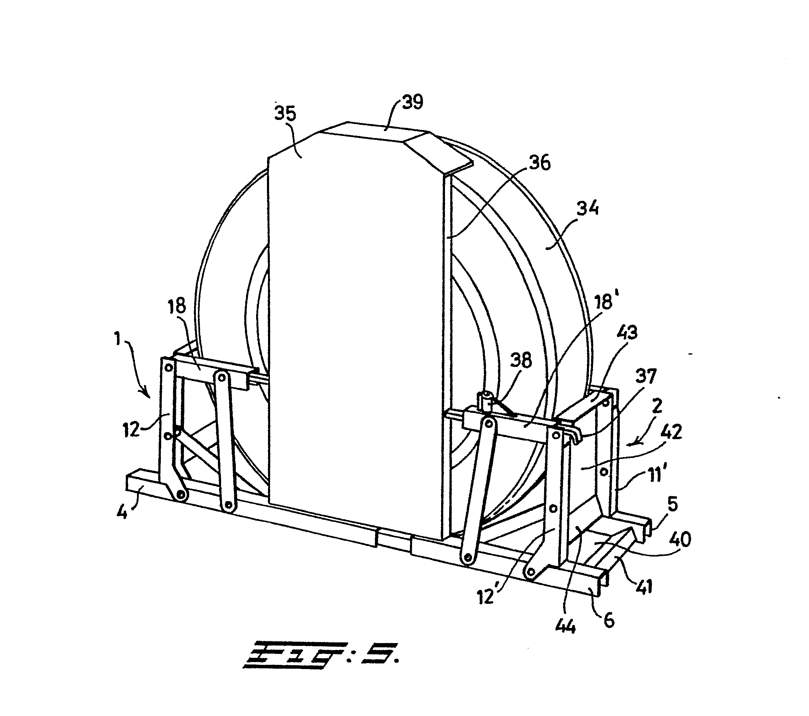

Between the beams 3, 4 and 5, 6 respectively are disposed respective plates 21 and 21', which extend over the entire width between the respective beams. The plates of the two frame parts are of identical construction and fastened in identical manner, and they will be described below with reference to fig. 4.

As can be seen in fig. 4, the plate 21 comprises a portion 22 which extends obliquely upwards and which in the embodiment illustrated is bent over to some extent, its free end normally resting on the ground. The upwardly extending portion is extended by way of a bend 23 by a downwardly extending portion 24, the free end of which normally lies some distance from the ground. The plate 21 is pivotally mounted between the beams 3 and 4 by means of a pivot pin 25 fastened in the bend.

A boss 26 extending over the entire length of the plate is provided on the upper face of the plate, at the height of the bend 23. This boss 26 serves to rock the plate in the direction of the arrow B when the enclosed wheel rides onto the upwardly inclined portion 22 and bears against the boss 26. Through the pivoting of the plate the free end of the downwardly directed part 24 will grip in the ground and thereby anchor the device. The free end of the part 24 may for this purpose optionally be provided with sharp edges or points forming anchoring means.

In the embodiment illustrated in the drawing the pivot pin 25 of the plate 21 is mounted, with the aid of a slot-like opening 27 extending in the length-wise direction, in slide members 28, which are mounted in the respective beams 3 and 4 of which one is shown in broken lines in fig. 4. The slide members 28 are connected by means of a frame 29 to the bars 11 and 12. The frame 29 consists of two parallel bars 30, 31, which are spaced apart and near their ends are connected together by crossbars 32, 33. The bars 30, 31 are hingedly connected at one end to the slide members 28 via the slots 27, and at the other end are hingedly connected to the bars 11, 12, approximately midway up the latter.

Fig. 3 shows a frame part 1 in an intermediate position during the folding-down of the upstanding portion. From this figure it is clear that the plate 21 is displaced in the direction of the arrow C during downward folding in the direction of the arrow A.

As can be seen in fig. 1, the beams 5 and 6 of the frame part 2 are provided with pins 34 and 35 adapted to be received in the cavities of the beams 3 and 4 of the frame part 1. The pin 35 is provided with regularly space apertures 36 in which the bolt of a lock 37 disposed on the end of the beam 4 can engage when the two frame parts move towards one another in the direction of the arrow D.

The operation of the device according to the invention is as follows:

The two frame parts are placed one on each side of the wheel which is to be locked, referring to the direction of movement of the vehicle, are moved as close as possible to one another, and are fastened together by means of the lock 37. In this position the plates 21 and 21' engage to some extent under the tread of the respective wheel, while the bars 17, 19, 17', 19' and 18, 20, 18', 20', together with the bars 30, 31 and 30', 31', enclose between them the side surfaces of the wheel. The tread of the wheel is enclosed by the crossbars 13 and 13', which optionally may be in the form of angle sections and, in the unfolded position, be disposed as high as possible between the bars 11, 12 and 11', 12' respectively.

If it is attempted to drive the vehicle away while the device is attached to one of the wheels, this wheel will ride onto the plate 21 or 21' and come into contact with the boss 26. The plate 21, 21' will pivot and the free end of the part 24 will grip in the ground. The wheel will then be arrested by the crossbar 13, 13'. The device can consequently not be dragged along by the vehicle.

For the purpose of detaching the device, the lock 37 is opened, whereupon the frame parts can be pulled apart. The upstanding portions are then folded down in the direction of the arrow A, so that a flat arrangement is obtained which can easily be stored in the boot of the vehicle, without requiring much space.

In fig. 5 a further embodiment of the device according to the invention is shown in its use position, a wheel 34 of a (not shown) vehicle being enclosed in between the both frame parts 1 and 2. In this embodiment the device is provided with a plate 35, which can be fastened to the upstanding portions of the two interconnected frame parts and is covering at least one of the wheel nuts of said wheel. By means of said plate it can be prevented that the wheel is removed from the vehicle, whereafter the wheel could be taken out of the interconnected frame parts and subsequently be mounted again to the vehicle.

Referring to fig. 5, the plate 35 has side flanges 36 and rests on the aligned beams 4 and 6 of the interconnected frame parts 1 and 2 respectively. A rod 37 extends through the bar 18' of frame part 2 and subsequently via openings in the side flanges 36 of the plate 35 into the bar 18 of frame part 1. The rod 37 can be locked in said position with aid of a lock 38 that in this case is arranged onto the bar 18'. The plate 35 preferably extends over the entire height of the wheel 34 and at the upper end is provided with an end flange 39 extending at least partly over the tread of the wheel. The width of the plate 35 is somewhat greater than the width of the frame parts so as to both frame parts in the folded down position can be taken up within said plate so that the device occupies as little space as possible.

In the embodiment of fig. 5 the support part of each frame part is manufactured from a single metal sheet in which the beams 3, 4 and 5, 6 respectively are formed as U-shaped channels, the beams of each frame part being connected by a plane sheet part 40, which is provided with a reinforcing ridge 41, extending transversally to said beams. Similarly the bars 11, 12 and 11', 12' respectively of each frame part are formed as U-shaped channels in a single metal sheet so as to between the bars 11 and 12, 11' and 12' respectively extends a flat sheet portion 42 that at both ends is provided with a reinforcement ridge 43 and 44.

It will be clear that many variants are possible within the scope of the present invention. Thus, the plates 21 and 21' may also be fastened between the beams 3 and 4, or 5 and 6 respectively, and the frame 29 may be replaced with a different stiffening means. It is important that the wheel of the vehicle should be enclosed on all sides and that the upstanding portions can be folded down so as to take up as little space as possible.

**0168067**

Claims:

1.      A device for locking a wheel (34) of a vehicle for the purpose of protection against theft, comprising a frame part (1, 2) to be placed in front of and behind the wheel, referring to the direction of travel of the wheel, which frame part consists of two parallel beams (3, 4 and 5, 6 respectively) spaced apart from one another, the beams of one frame part (2) being adapted to slide telescopically in the beams of the other frame part (1) and to be fastened to one another so as to enclose the wheel in question, and each frame part being provided with means for locking the wheel in the direction of travel, characterized in that the two parallel beams (3, 4 and 5, 6 respectively) of each frame part form a support part to be placed on the ground, and the wheel-locking means are formed by an upstanding portion (11, 12, 17, 18, 19, 20 and 11', 12', 17' 18' 19, 20') which is connected to the support part for folding down and up and which encloses the wheel both in the direction of travel and partly along the side faces.

2.      A device according to claim 1, characterized in that the upstanding portion of each frame part is formed by two parallel bar quadrilaterals (3, 11, 17, 19 and 4, 12, 18, 20; 5, 11', 17', 19' and 6, 12', 18', 20') which are disposed opposite one another, each beam of the support part always forming part of one of the quadrilaterals, which are jointed together by one or more crossbars (13, 13') and have pivoted corner points, so that the two oppositely disposed quadrilaterals can as a whole be folded up or folded down against the support part.

3.      A device according to claim 1 or 2, characterized in that between the parallel beams (3, 4 and 5, 6 respectively) of each support part a tiltable plate (21, 21') is disposed, which is provided with anchoring means (24) gripping in the ground when the plate is tilted through the action of the wheel riding onto it.

4.      A device according to claim 3, characterized in that the tiltable plate is mounted for sliding between the beams of the support part and is coupled to the upstanding portion in such a manner that the folding of said portion downwards or upwards brings about a sliding of the plate.

5.      A device according to claim 3 or 4, characterized in that the plate has a portion (22) which extends obliquely upwards, and which in use rests with its free end on the ground and merges via a bend (23) into a downwardly directed part (24) which ends some distance from the ground, this plate being pivotally mounted between the beams (3, 4 and 5, 6 respectively) by means of a pivot pin (25) disposed in the bend, a boss (26) extending parallel to the pin (25) being disposed at the height of the bend.

6.      A device for locking a wheel (34) of a vehicle, comprising a frame part (1, 2) to be placed in front of and behind the wheel, referring to the direction of travel of the wheel, which frame part consists of two parallel beams (3, 4 and 5, 6 respectively) spaced apart from one another, the beams of one frame part (2) being adapted to slide telescopically in the beams of the other frame part (1) and to be fastened to one another so as to enclose the wheel in question, and each of the frame parts is provided with means for locking the wheel in de direction of travel, means being provided for covering at least one of the wheel nuts, characterized in that the means for covering at least one of the wheel nuts consists of a plate (35) which by means of a rod (37) can be fastened to the upstanding portions of the two frame parts.

7.    A device according to claim 6, characterized in that the plate (35) has flanged side edges (36) and the rod (37) extends in succession through the bar (18') of the frame part (2), via openings formed in the side edges, into the bar (18) of the frame part (1) and in that position is fastened by a lock (37).

8.    A device according to claim 6 or 7, characterized in that the plate (35) has a width somewhat greater than that of the frame parts.

9.    A device according to one of the preceding claims 6 to 8, characterized in that the plate (35) is provided with an end flange (39), which in use partly extends over the tread of the wheel.

FIG:1.

0168067

*FIG: 2.*

*FIG: 3.*

*FIG: 4.*

FIG:5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | US-A-3 581 846 (J.A. JANUS)<br>* Whole document * | 1 | B 60 R 25/00<br>B 60 T 3/00 |
| X | US-A-3 687 238 (W.C. CARPENTER)<br>* Whole document * | 1 | |
| X | US-A-4 155 429 (R.G. SCHESSL)<br>* Whole document * | 1 | |
| D,X | GB-A-2 112 725 (LIONWELD LTD.)<br>* Whole document * | 1 | |
| A | NL-A-7 613 111 (J.-J. VAN HARTESVELDT)<br>* Whole document * | | |
| | | | **TECHNICAL FIELDS SEARCHED (Int. Cl.4)**<br><br>B 60 R<br>B 60 T |

The present search report has been drawn up for all claims

| Place of search | Date of completion of the search | Examiner |
|---|---|---|
| THE HAGUE | 05-08-1985 | HEROUAN E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82